# EUROPEAN PATENT APPLICATION

(11) **EP 4 635 805 A1**
(43) Date of publication of application: **22.10.2025**
(21) Application number: 24741387.5
(22) Date of filing: 12.01.2024
(51) Int. Cl.: B60R 25/20

(54) **VEHICLE CONTROL METHOD AND APPARATUS, AND DEVICE**

(30) Priority: 13.01.2023 CN 202310091593; 25.10.2023 CN 202311399762
(71) Applicant: Shenzhen Yinwang Intelligent Technologies Co., Ltd., Shenzhen, Guangdong 518110 (CN)
(72) Inventor: LV, Sen, Shenzhen, Guangdong 518129 (CN); QIU, Fengguang, Shenzhen, Guangdong 518129 (CN); CHEN, Bing, Shenzhen, Guangdong 518129 (CN); LIN, Wubin, Shenzhen, Guangdong 518129 (CN); YUAN, Zhongxian, Shenzhen, Guangdong 518129 (CN)
(74) Representative: Gill Jennings & Every LLP
(86) International application number: PCT/CN2024/072157
(87) International publication number: WO 2024/149393

(57) **Abstract**

Embodiments of this application provide a vehicle control method and apparatus, and a device. The method may be performed by a control apparatus in a vehicle. The method includes: The control apparatus obtains position information of user equipment, obtains control information or account information of the user equipment when the position information indicates that a position relationship between the vehicle and the user equipment meets a preset condition, and then performs greeting control on the vehicle based on the position information and the control information, or the position information and the account information. This implements intelligent greeting on a user, thereby improving vehicle use experience of the user.

## Description

This application claims priorities to Chinese Patent Application No. 202310091593.6, filed with the China National Intellectual Property Administration on January 13, 2023 and entitled "VEHICLE CONTROL METHOD AND APPARATUS, AND DEVICE", and to Chinese Patent Application No. 202311399762.9, filed with the China National Intellectual Property Administration on October 25, 2023 and entitled "VEHICLE CONTROL METHOD AND APPARATUS, AND DEVICE", both of which are incorporated herein by reference in their entireties.

### TECHNICAL FIELD

This application relates to the field of vehicle technologies, and in particular, to a vehicle control method and apparatus, and a device.

### BACKGROUND

Currently, comfort, travel safety, and human-vehicle interaction experience of users in travel processes are continuously improved through intelligent design of vehicles. However, when the user does not drive the vehicle, or even does not unlock the vehicle or does not enter the vehicle, how the vehicle greets the user to provide comfortable and pleasant vehicle use experience for the user is an urgent problem to be resolved currently.

### SUMMARY

Embodiments of this application provide a vehicle control method and apparatus, and a device, to provide comfortable and pleasant vehicle use experience for a user by greeting the user.

According to a first aspect, an embodiment of this application provides a vehicle control method. The method may be performed by a control apparatus (for example, a control apparatus 210 in a vehicle 200 in the following). The control apparatus may be implemented as a component, for example, a chip, a chip system, or another functional module that can invoke a program and execute the program, in a vehicle. For ease of understanding, the following describes the method by using the control apparatus as an example.

For example, the method includes: The control apparatus obtains position information of user equipment, obtains control information or account information of the user equipment when the position information indicates that a position relationship between the vehicle and the user equipment meets a preset condition, and performs greeting control on the vehicle based on the position information and the control information, or the position information and the account information.

The control information may be, for example, control information for the user equipment to unlock the vehicle or control information for the user equipment to lock the vehicle. The control information may be generated by the user equipment in response to an operation of a user, for example, a press (or touch) operation of the user on a button (including a virtual button) on the user equipment, or the control information may be automatically triggered by the user equipment. It should be understood that the control information is not limited in this application. For example, the control information may alternatively be control information for vehicle window opening, control information for air conditioner adjustment, or control information for vehicle startup sent by the user equipment in response to a user operation or automatic triggering.

The account information may be, for example, information about an account corresponding to the user equipment. The user equipment may correspond to one or more accounts. Optionally, the user equipment may interact with the vehicle (for example, a communication apparatus of the vehicle) to transmit the account information.

Therefore, the control apparatus performs greeting control on the vehicle based on the position information of the user equipment and based on the control information or the account information that is of the user equipment and that is obtained based on the position information, to implement intelligent greeting on the user, so as to improve vehicle use experience of the user.

The control apparatus performs greeting control on the vehicle based on the position information and the control information, to identify a vehicle use intention of the user, so as to avoid poor user experience caused by performing out-of-vehicle greeting after the user has a clear control intention for the vehicle. The control apparatus performs greeting control on the vehicle based on the position information and the account information, to provide targeted greeting effect for the user, so as to improve user experience.

For example, that the control apparatus performs greeting control on the vehicle based on the position information and the account information may include: when the position information indicates that the user equipment enters an out-of-vehicle greeting area of the vehicle, logging in, based on the account information, to the account corresponding to the user equipment, and performing greeting control on the vehicle based on a user preference corresponding to the account. It should be noted that the account may have the corresponding user preference, for example, a seat pose preferred by the user (or a seating space form formed by a seat), an audio preferred by the user, an animation preferred by the user, or a chassis height preferred by the user (or a chassis height matching a height of the user).

For example, that the control apparatus performs greeting control on the vehicle based on the position information and the control information may include: When the position information meets a first condition, and the control information meets a second condition, the control apparatus controls the vehicle to enable an out-of-vehicle greeting mode. The out-of-vehicle greeting area may be a preset area around the vehicle. In the out-of-vehicle greeting area, a distance between the user equipment and the vehicle is less than or equal to a first preset value. In other words, the user equipment is in the out-of-vehicle greeting area when the distance between the user equipment and the vehicle is less than or equal to the first preset value. Alternatively, in the out-of-vehicle greeting area, the distance between the user equipment and the vehicle is less than or equal to the first preset value and is greater than or equal to a second preset value. In other words, the user equipment is in the out-of-vehicle greeting area when the distance between the user equipment and the vehicle is less than or equal to the first preset value and is greater than or equal to the second preset value.

In a first implementation of the foregoing example, the first condition may include: The user equipment enters the out-of-vehicle greeting area of the vehicle. The second condition may include: The user equipment does not unlock the vehicle. In a second implementation of the foregoing example, the first condition may include: The user equipment enters the out-of-vehicle greeting area of the vehicle for the first time before the vehicle completes a target operation. The second condition may include: The user equipment does not unlock the vehicle. The target operation may include at least one of unlocking, locking, power-on, power-off, travel, startup, and shutdown.

The first implementation has lower processing complexity, and efficiency of greeting control can be improved. Compared with that in the first implementation, in the second implementation, the control apparatus considers, when the user equipment enters the out-of-vehicle greeting area of the vehicle for the first time before the vehicle completes the target operation, performing greeting control on the vehicle, but does not perform greeting control on the vehicle when the user equipment enters the out-of-vehicle greeting area of the vehicle again or a plurality of times later before the vehicle completes the target operation. Problems that user experience is poor and energy consumption of the vehicle is high and that are easily caused by repeatedly controlling the vehicle to perform out-of-vehicle greeting are mainly considered in the following example scenarios. Scenario 1: For example, the user enters the out-of-vehicle greeting area a plurality of times because the user makes a detour to avoid an obstacle or the like. Scenario 2: The user may enter the out-of-vehicle greeting area a plurality of times when wandering around the vehicle. In this case, the user may not have a vehicle use requirement. For example, the user chats around the vehicle, or checks a vehicle condition. The control apparatus can correctly identify a user intention, and does not continue to perform out-of-vehicle greeting.

For example, the out-of-vehicle greeting mode may include a control strategy set for out-of-vehicle greeting in at least one control dimension like account management, vehicle light control, chassis height adjustment, seat adjustment, and animation presentation.

For example, to improve greeting effect of out-of-vehicle greeting, in the out-of-vehicle greeting mode, the control apparatus may perform at least one of the following:
logging in to the account corresponding to the user equipment;
performing greeting control on a vehicle light according to a preset rule, where the preset rule may include but is not limited to at least one of breathing turn-on, breathing blinking, chasing (or scrolling) turn-on, and chasing blinking;
adjusting an air spring of a chassis;
adjusting the seat to a greeting position;
presenting a first greeting animation; and
playing a first greeting audio, where content of the first greeting audio is not limited in this application. In some embodiments, the first greeting audio may correspond to the first greeting animation.

To further improve intelligent effect of greeting, for example, that the control apparatus performs greeting control on the vehicle further includes: ending the out-of-vehicle greeting mode. When the position information meets a third condition, or the control information meets a fourth condition, the control apparatus may control the vehicle to end the out-of-vehicle greeting mode.

The third condition may include: The user equipment leaves the out-of-vehicle greeting area of the vehicle. The fourth condition may include: The user equipment unlocks the vehicle, and/or duration for performing the out-of-vehicle greeting mode reaches preset duration. For example, after the user equipment unlocks the vehicle, the control apparatus may end the out-of-vehicle greeting mode and enable an unlocking greeting mode. When the duration for performing the out-of-vehicle greeting mode reaches the preset duration and another greeting mode is not triggered, the control apparatus considers that the user does not have a driving intention, or cannot perform unlocking due to an abnormal condition, for example, the user equipment may be disconnected from the vehicle (for example, a Bluetooth connection is disconnected). Therefore, the control apparatus may end the out-of-vehicle greeting mode.

In some scenarios, at least two user equipments may be connected to the vehicle. In this case, to implement intelligent greeting control, the control apparatus uses one of the at least two user equipments as target user equipment, and performs greeting control on the target user equipment.

In a first example, the control apparatus determines, as the target user equipment based on account information respectively corresponding to the at least two user equipments, user equipment with a largest login frequency or a largest quantity of logins. In this case, the target user equipment is a user that is more frequently used than other user equipment in the at least two user equipments. Then, greeting control is performed on the vehicle based on position information and control information that correspond to the target user equipment or based on the position information and account information that correspond to the target user equipment.

In a second example, the control apparatus determines, as the target user equipment based on position information respectively corresponding to the at least two user equipments, user equipment that is a first one entering the out-of-vehicle greeting area, and then performs greeting control on the vehicle based on position information and control information that correspond to the target user equipment or based on the position information and account information that correspond to the target user equipment.

In a third example, the control apparatus determines, as the target user equipment based on greeting modes respectively corresponding to the at least two user equipments, user equipment corresponding to a greeting mode with a highest priority, and then performs greeting control on the vehicle based on position information and control information that correspond to the target user equipment or based on the position information and account information that correspond to the target user equipment.

In the first example, a main user of the vehicle can be better identified, and user experience can be better improved by greeting the main user. In the second example, efficiency of greeting control is higher, and processing complexity is lower. In the third example, a solution for triggering different greeting modes by the user equipment is provided.

In some scenarios, another user may be seated in the vehicle when the user equipment triggers the vehicle to enable the out-of-vehicle greeting mode. For ease of differentiation, a user corresponding to the user equipment is referred to as a first user, and the user who is seated in the vehicle is referred to as a second user. In this case, to improve intelligence of greeting control and consider vehicle use experience of different users, this embodiment of this application provides the following implementations to perform greeting control on the vehicle.

Implementation 1: The control apparatus determines whether the second user is seated in a cockpit of the vehicle. When the second user is not seated in the cockpit of the vehicle, the control apparatus performs greeting control in the manner in the foregoing example, for example, performs greeting control on the vehicle based on the position information and the control information, or the position information and the account information. Correspondingly, when the second user is seated in the cockpit of the vehicle, the control apparatus does not perform greeting control on the vehicle.

Implementation 2: The control apparatus determines whether the second user is seated in a cockpit of the vehicle; and performs greeting control on the vehicle in a first greeting mode when the second user is not seated in the cockpit of the vehicle; or performs greeting control on the vehicle in a second greeting mode when the second user is seated in the cockpit of the vehicle. It should be understood that, when performing greeting control on the vehicle in the first greeting mode, or performing greeting control on the vehicle in the second greeting mode, the control apparatus may perform greeting control on the vehicle in the greeting control manner in the foregoing example, for example, based on the position information and the control information, or based on the position information and the account information.

The first greeting mode and the second greeting mode may be different greeting modes. In other words, different greeting effect is presented in the first greeting mode and the second greeting mode.

To provide better vehicle use experience through greeting control for a user who actually uses the vehicle, facial information of the user (for example, the first user) may be captured, to log in, based on the facial information, to an account corresponding to the first user, and then greeting control is performed on the vehicle based on the account corresponding to the first user.

For example, to ensure account security and user privacy, before the facial information of the first user is captured, the control apparatus may encrypt to-be-displayed target information that is under the account corresponding to the user equipment. The target information may be any information that is under the account corresponding to the user equipment and that can be presented. Generally, the target information has high privacy. That the control apparatus encrypts the target information may be, for example, adding a mosaic to the target information, blocking the target information, or skipping displaying the target information.

According to a second aspect, an embodiment of this application provides a vehicle control method, including: capturing facial information of a first user; switching, based on the facial information of the first user, a logged-in account corresponding to user equipment to an account corresponding to the first user, where the account corresponding to the user equipment is logged in to when the user equipment is in an out-of-vehicle greeting area of a vehicle; and performing greeting control on the vehicle based on the account corresponding to the first user, where in the out-of-vehicle greeting area, a distance between the user equipment and the vehicle is less than or equal to a first preset value, or in the out-of-vehicle greeting area, the distance between the user equipment and the vehicle is less than or equal to the first preset value and is greater than or equal to a second preset value.

For example, before the capturing facial information of a first user, the method further includes: encrypting to-be-displayed target information that is under the account corresponding to the user equipment.

According to a third aspect, an embodiment of this application provides a control apparatus, including: an obtaining module, configured to obtain position information of user equipment, where the obtaining module is further configured to obtain control information or account information of the user equipment when the position information indicates that a position relationship between a vehicle and the user equipment meets a preset condition; and a processing module, configured to perform greeting control on the vehicle based on the position information and the control information, or the position information and the account information.

In a possible implementation, the processing module is specifically configured to: when the position information indicates that the user equipment enters an out-of-vehicle greeting area of the vehicle, log in, based on the account information, to an account corresponding to the user equipment; and perform greeting control on the vehicle based on a user preference corresponding to the account.

In a possible implementation, the processing module is specifically configured to: when the position information meets a first condition, and the control information meets a second condition, control the vehicle to enable an out-of-vehicle greeting mode. The first condition includes: The user equipment enters the out-of-vehicle greeting area of the vehicle; or the user equipment enters the out-of-vehicle greeting area of the vehicle for the first time before the vehicle completes a target operation. The target operation includes at least one of unlocking, locking, power-on, power-off, travel, startup, and shutdown. The second condition includes: The user equipment does not unlock the vehicle. In the out-of-vehicle greeting area, a distance between the user equipment and the vehicle is less than or equal to a first preset value. Alternatively, in the out-of-vehicle greeting area, the distance between the user equipment and the vehicle is less than or equal to the first preset value and is greater than or equal to a second preset value.

In a possible implementation, the processing module is specifically configured to: when the position information meets a third condition, or the control information meets a fourth condition, control the vehicle to end the out-of-vehicle greeting mode. The third condition includes: The user equipment leaves the out-of-vehicle greeting area of the vehicle. The fourth condition includes: The user equipment unlocks the vehicle, and/or duration for performing the out-of-vehicle greeting mode reaches preset duration. In the out-of-vehicle greeting area, the distance between the user equipment and the vehicle is less than or equal to the first preset value. Alternatively, in the out-of-vehicle greeting area, the distance between the user equipment and the vehicle is less than or equal to the first preset value and is greater than or equal to the second preset value.

In a possible implementation, the processing module is further configured to: determine, as target user equipment based on account information respectively corresponding to at least two user equipments, user equipment with a largest login frequency or a largest quantity of logins; and perform greeting control on the vehicle based on position information and control information, or the position information and account information that correspond to the target user equipment.

In a possible implementation, the processing module is further configured to: determine, as target user equipment based on position information respectively corresponding to at least two user equipments, user equipment that is a first one entering the out-of-vehicle greeting area; and perform greeting control on the vehicle based on position information and control information, or the position information and account information that correspond to the target user equipment.

In a possible implementation, the processing module is further configured to: determine, as target user equipment based on greeting modes respectively corresponding to at least two user equipments, user equipment corresponding to a greeting mode with a highest priority; and perform greeting control on the vehicle based on position information and control information, or the position information and account information that correspond to the target user equipment.

In a possible implementation, the processing module is further configured to: capture facial information of a first user; log in, based on the facial information of the first user, to an account corresponding to the first user; and perform greeting control on the vehicle based on the account corresponding to the first user.

In a possible implementation, the processing module is specifically configured to: determine whether a second user is seated in a cockpit of the vehicle; and when the second user is not seated in the cockpit of the vehicle, perform greeting control on the vehicle in a first greeting mode based on the position information and the control information, or the position information and the account information; or when the second user is seated in the cockpit of the vehicle, perform greeting control on the vehicle in a second greeting mode based on the position information and the control information, or the position information and the account information.

In a possible implementation, the obtaining module is specifically configured to: position the user equipment via a Bluetooth apparatus; and position the user equipment via an ultra-wideband UWB apparatus when it is determined that the distance between the user equipment and the vehicle is less than or equal to a third preset value, to obtain the position information.

According to a fourth aspect, an embodiment of this application provides a control apparatus, including: an obtaining module, configured to capture facial information of a first user; and a processing module, configured to switch, based on the facial information of the first user, a logged-in account corresponding to user equipment to an account corresponding to the first user, where the account corresponding to the user equipment is logged in to when the user equipment is in an out-of-vehicle greeting area of a vehicle. The processing module is further configured to perform greeting control on the vehicle based on the account corresponding to the first user. In the out-of-vehicle greeting area, a distance between the user equipment and the vehicle is less than or equal to a first preset value. Alternatively, in the out-of-vehicle greeting area, the distance between the user equipment and the vehicle is less than or equal to the first preset value and is greater than or equal to a second preset value.

In a possible implementation, before the facial information of the first user is captured, the processing module is further configured to skip displaying target information that is under the account corresponding to the user equipment.

According to a fifth aspect, an embodiment of this application provides an electronic device, including a processor and a memory. The memory is configured to store a computer program. The processor is configured to: invoke and run the computer program stored in the memory, to perform the method according to the first aspect, the second aspect, or each possible implementation.

According to a sixth aspect, an embodiment of this application provides a chip, including a processor, configured to: invoke computer instructions from a memory and run the computer instructions, to enable a device in which the chip is installed to perform the method according to the first aspect, the second aspect, or each possible implementation.

According to a seventh aspect, an embodiment of this application provides a computer-readable storage medium, configured to store computer program instructions. The computer program enables a computer to perform the method according to the first aspect, the second aspect, or each possible implementation.

According to an eighth aspect, an embodiment of this application provides a computer program product, including computer program instructions. The computer program instructions enable a computer to perform the method according to the first aspect, the second aspect, or each possible implementation.

According to a ninth aspect, an embodiment of this application provides a vehicle, including the apparatus according to the third aspect, the fourth aspect, or each possible implementation.

According to a tenth aspect, an embodiment of this application provides a terminal, including the apparatus according to the third aspect, the fourth aspect, or each possible implementation.

When the vehicle control method and apparatus, and the device provided in this application are implemented in the second aspect to the tenth aspect and the possible implementations, for beneficial effect of the second aspect to the tenth aspect and the possible implementations, refer to beneficial effect brought by the first aspect and the possible implementations of the first aspect. Details are not described herein again.

### BRIEF DESCRIPTION OF DRAWINGS

FIG. 1 is a diagram of an application scenario of greeting control according to an embodiment of this application;
FIG. 2 is a diagram of a vehicle according to an embodiment of this application;
FIG. 3 is a schematic flowchart of a vehicle control method according to an embodiment of this application;
FIG. 4 is a diagram of division of an area around a vehicle according to an embodiment of this application;
FIG. 5 is a schematic flowchart of a vehicle control method according to an embodiment of this application;
FIG. 6 is a diagram of a vehicle control procedure according to an embodiment of this application;
FIG. 7 is a block diagram of a vehicle control apparatus according to an embodiment of this application; and
FIG. 8 is a block diagram of another vehicle control apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be performed by an electronic device. The electronic device may be deployed in a mobile device or connected to the mobile device in a wired or wireless manner. Certainly, the electronic device may alternatively be the mobile device. The mobile device may have any appearance, for example, an intelligent vehicle or an intelligent robot.

The electronic device may be a terminal device, for example, a smartphone, a tablet computer, a notebook computer, or a desktop computer, but is not limited thereto. Alternatively, the electronic device may be a server. The server may be an independent physical server, or may be a server cluster or a distributed system including a plurality of physical servers, or may be a cloud server that provides a cloud computing service.

The technical solutions in embodiments of this application may be performed by a software system. The software system may be deployed on the foregoing electronic device.

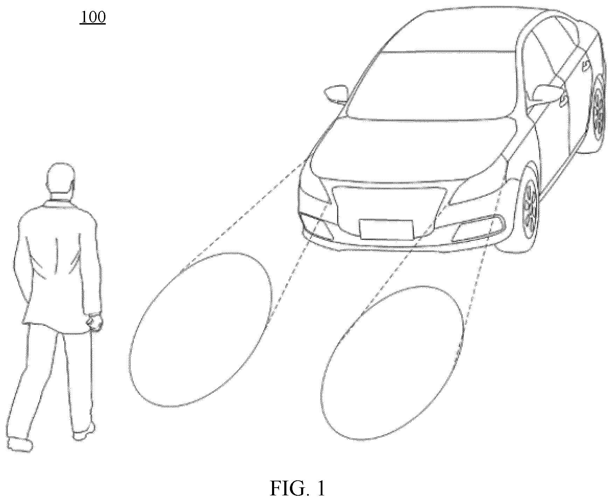

According to a vehicle control method provided in embodiments of this application, interaction with user equipment can be implemented by controlling a vehicle, to implement effect of interaction like greeting or seeing-out. For example, the vehicle may interact with a user in at least one phase like an out-of-vehicle greeting phase, an unlocking greeting phase, an onboard greeting phase, and an offboard seeing-out phase (or a getting-off seeing-out phase), to improve user experience. For example, on a basis of an application scenario 100 shown in FIG. 1, when the user approaches the vehicle, the vehicle may perform greeting control, for example, control a vehicle light to blink, present a greeting caption or animation, adjust a seat, or adjust a vehicle chassis.

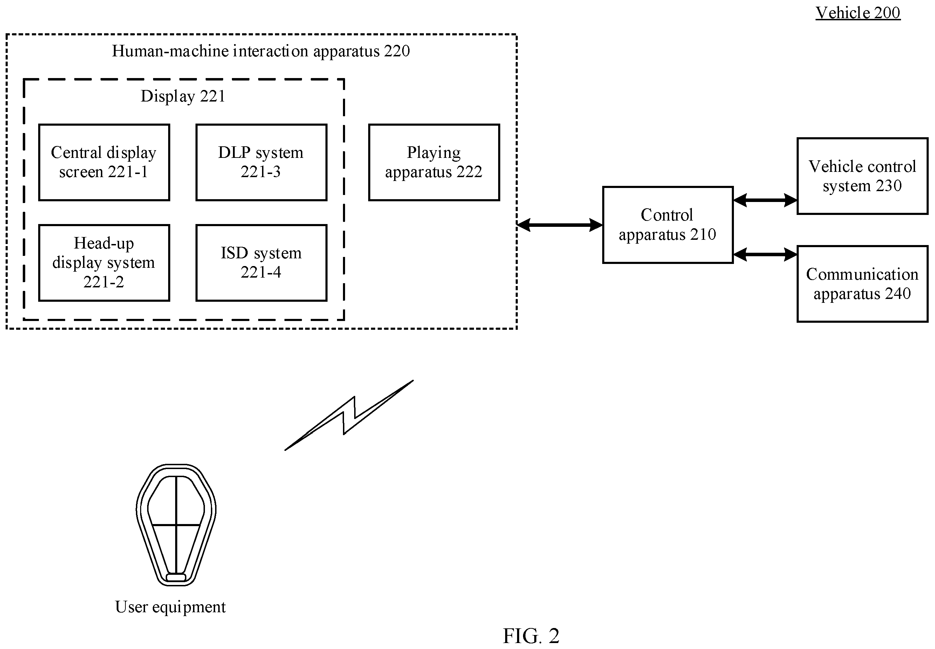

FIG. 2 is a diagram of a vehicle 200 according to an embodiment of this application. As shown in FIG. 2, the vehicle 200 includes but is not limited to a control apparatus 210, a human-machine interaction apparatus 220, a vehicle control system 230, and a communication apparatus 240.

The control apparatus 210 may be any hardware or software having a processing capability, for example, may be implemented as an entire-vehicle control system and/or a cockpit control system. This is not limited in this application. When the control apparatus 210 includes the entire-vehicle control system and the cockpit control system, data processing may be implemented by the entire-vehicle control system, and information push may be implemented by the cockpit control system.

The human-machine interaction apparatus 220 may include a display 221 and/or a player 222. The display 221 may include a display deployed in any position of the vehicle, for example, include an out-of-vehicle display and/or an in-vehicle display. In addition, a quantity of displays 221 deployed in the vehicle is not limited in this application. The display 221 may include at least one of a central display screen 221-1, a head-up display system 221-2, a digital light processing (digital light processing, DLP) system 221-3, an interactive signal display (interactive signal display, ISD) system 221-4, and the like. The head-up display system is also referred to as a head-up display (head-up display, HUD). The DLP system 221-3 may include one or more DLP lights. The ISD system 221-4 may include one or more ISD lights. The player 222 may be, for example, a speaker or a Bluetooth headset.

The control apparatus 210 may present an interaction interface, for example, a greeting animation, a greeting image, or a greeting caption, in a greeting mode to a user via the display 221, and may play an audio in the greeting mode to the user via the player 222, for example, play a greeting voice, greeting music, or greeting sound effect.

The vehicle control system 230 may include but is not limited to components such as a seat, a chassis, vehicle lights, a speaker, a vehicle door, a vehicle window, and an air conditioning system. A control unit in the vehicle system 230 may perform greeting control on at least one component in the vehicle control system, for example, control for adjusting the seat to a greeting state, adjust a chassis height to the greeting state, or adjust the vehicle light for turn-on, blinking, lighting chromaticity, or lighting brightness, to implement greeting, control the speaker for playing a greeting audio, control the vehicle door for opening, control the vehicle window for half-opening, and control the air conditioning system for running. The control unit in the vehicle control system 230 may control each component in the vehicle control system 230 in response to a control instruction of the control apparatus 210.

The vehicle lights include but are not limited to at least one of a headlight, a taillight, a side marker light, a turn light, a brake light, a through light, a marker light, a ground light, and a position light. The headlight may include at least one of a high beam headlight, a low beam headlight, and a fog light. Some of the vehicle lights may be combined for control. For example, the low beam headlight and the position light may form a headlight group. Optionally, in different vehicle designs, the headlight group may include different vehicle lights. This is not limited in this application.

Optionally, the vehicle lights may further include an indicator light, a decorative light, and the like that is deployed in any position on the vehicle, for example, a door handle light.

In addition to the vehicle lights deployed outside the vehicle in the foregoing example, the vehicle lights may include a light deployed inside the vehicle, for example, an atmosphere light. In some embodiments, the ground light may alternatively be deployed inside the vehicle.

The communication apparatus 240 may interact with user equipment. A technology for interaction between the communication apparatus 240 and the user equipment is not limited in this application. For example, interaction may be performed based on a Bluetooth technology and/or an ultra-wideband (ultra-wideband, UWB) technology. For example, the communication apparatus 240 may include a Bluetooth module 241 and/or a UWB module 242. The Bluetooth module 241 may establish a Bluetooth link with an external device to implement Bluetooth communication. The UWB module 242 may interact with the external device based on the UWB technology, for example, implement device positioning. The user equipment may be any terminal device carried by the user, for example, a mobile phone (Mobile Phone), a tablet computer (Pad), a desktop computer, or a terminal device in industrial control (industrial control). Alternatively, the terminal device may be a wearable device. The wearable device may also be referred to as a wearable smart device, and is a general term of wearable devices that are intelligently designed and developed for daily wear by using a wearable technology, for example, glasses, gloves, a watch, clothing, and shoes. The wearable device is a portable device that is directly worn on a body or integrated into clothes or an accessory of a user. The user equipment may have or be provided with a communication module (for example, a Bluetooth module and/or a UWB module). The user equipment may be further implemented as a vehicle key, or may have a function of the vehicle key.

With reference to the accompanying drawings, the following describes in detail the vehicle control method provided in embodiments of this application.

It should be understood that, for ease of understanding and description, the following describes, by using only a control apparatus in a vehicle as an example, the method provided in embodiments of this application. The control apparatus may be, for example, the control apparatus 210 in FIG. 2. The control apparatus may be implemented as a component, for example, a chip, a chip system, or another functional module that can invoke a program and execute the program, in the vehicle.

However, it should be understood that this shall not constitute any limitation on an entity for performing the method provided in this application. Any device may perform the method provided in embodiments of this application provided that the device can run a program that records code of the method provided in embodiments of this application, to implement the method provided in embodiments of this application.

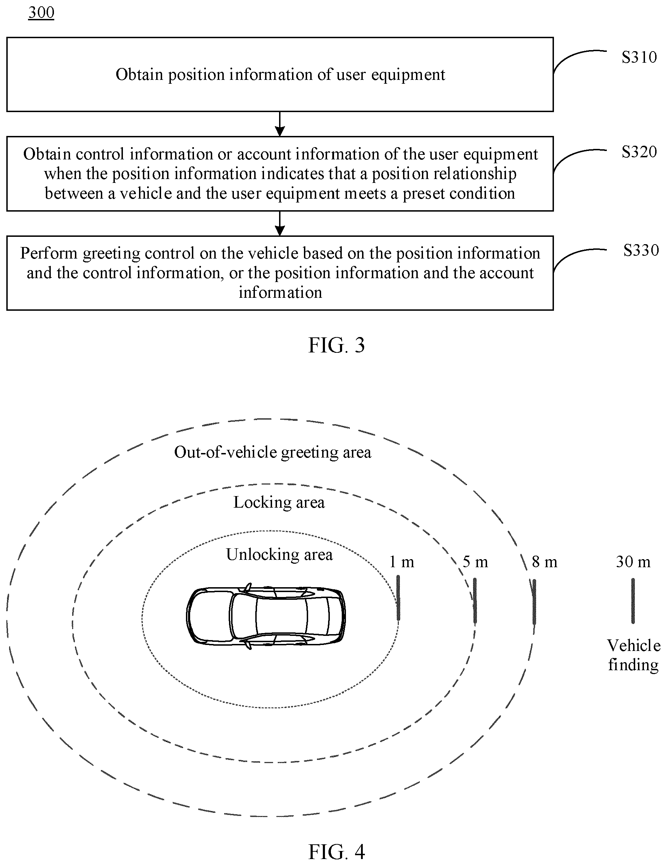

FIG. 3 is a schematic flowchart of a vehicle control method 300 according to an embodiment of this application. As shown in FIG. 3, the method 300 may include a part or all of the following steps.

S310: Obtain position information of user equipment.

S320: Obtain control information or account information of the user equipment when the position information indicates that a position relationship between a vehicle and the user equipment meets a preset condition.

S330: Perform greeting control on the vehicle based on the position information and the control information, or the position information and the account information.

The position information of the user equipment may be information about an absolute position of the user equipment in any coordinate system. Alternatively, the position information of the user equipment may be information about a relative distance between the user equipment and the vehicle. This is not limited in this application. Generally, the user equipment is carried by a user. Therefore, the position information of the user equipment may indicate position information of the user.

For ease of description of the position relationship between the vehicle and the user equipment, division of an area around the vehicle is first described as an example with reference to FIG. 4. Refer to FIG. 4. The area around the vehicle may be divided into an out-of-vehicle greeting area, an unlocking area, an onboard greeting area, and a locking area based on distances. For example, with the vehicle as the center of a circle, an area having a radius of 8 meters is the out-of-vehicle greeting area; with the vehicle as the center of the circle, an area having a radius of 1 meter is the unlocking area; an area in the vehicle is the onboard greeting area; and with the vehicle as the center of the circle, an area having a radius of 5 meters is the locking area. It should be understood that FIG. 4 is merely an example of the areas. A quantity of areas and a range of each area are not limited in this application. Each area and the range of each area may be set based on an application scenario.

For example, when the vehicle is in different areas, the control apparatus may perform greeting control based on the control information or the account information of the user equipment of the vehicle. Alternatively, when the vehicle is in any one of the foregoing areas, the control apparatus performs greeting control based on the control information or the account information of the user equipment. For example, when the vehicle is in the out-of-vehicle greeting area, the control apparatus performs greeting control based on the control information or the account information of the user equipment.

For example, the control apparatus may communicate with the user equipment, to obtain the position information of the user equipment, and then determine the position relationship between the user equipment and the vehicle. As described above, the control apparatus may interact with the user equipment based on a Bluetooth technology and/or a UWB technology to obtain the position information of the user equipment. However, this is not limited in this application. For example, the control apparatus may sense a position relationship between the user and the vehicle via a visual system deployed on the vehicle.

In an implementation of the foregoing example, the control apparatus may first position the user equipment based on the Bluetooth technology. If the user equipment is farther away from the vehicle, for example, a distance between the user equipment and the vehicle is greater than or equal to 10 m, the control apparatus may continue to position the user equipment based on the Bluetooth technology. If the user equipment is closer to the vehicle, for example, the distance between the user equipment and the vehicle is less than 10 m, the control apparatus may position the user equipment based on the UWB technology, to improve positioning accuracy. In another implementation of the foregoing example, when the user equipment enters a Bluetooth coverage area of the control apparatus (for example, a distance between the user equipment and the vehicle is 30 m), the control apparatus may perform a Bluetooth connection to the user equipment, and position the user equipment based on the Bluetooth technology, and switch, until the distance between the user equipment and the vehicle is reduced to a distance threshold (for example, 10 m), to positioning the user equipment based on the UWB technology.

It may be understood that the control apparatus may switch to a higher-accuracy positioning technology before the user equipment enters the out-of-vehicle greeting area, to implement accurate positioning of the user equipment. For example, it is assumed that the user equipment enters the out-of-vehicle greeting area when the distance between the user equipment and the vehicle is less than or equal to 8 m. When the distance between the user equipment and the vehicle is greater than 8 m (for example, 10 m), the control apparatus performs positioning based on the UWB technology, to accurately detect whether the vehicle enters the out-of-vehicle greeting area.

For example, the control apparatus may position the user equipment via a Bluetooth apparatus, and position the user equipment via a UWB apparatus when determining that the distance between the user equipment and the vehicle is less than or equal to a third preset value, to obtain the position information of the user equipment. The third preset value may be greater than a maximum distance between the out-of-vehicle greeting area and the vehicle. For example, the out-of-vehicle greeting area is the area having the radius of 8 meters, with the vehicle as the center of the circle. The third preset value may be greater than 8 m. For example, the third preset value is 10 m.

When the user equipment is closer to the vehicle, the control apparatus may obtain the control information or the account information of the user equipment, and then perform greeting control based on the control information or the account information.

The preset condition may be set for the area around the vehicle. For example, the preset condition may be that the user equipment enters the out-of-vehicle greeting area, for example, the preset condition is that the distance between the user equipment and the vehicle is less than or equal to 8 m. For another example, the preset condition may be that the user equipment is about to enter the out-of-vehicle greeting area, for example, the distance between the user equipment and the vehicle is less than or equal to 9 m.

The control information may be, for example, control information for the user equipment to unlock the vehicle or control information for the user equipment to lock the vehicle. The control information may be control information generated by the user equipment in response to an operation of the user, for example, a press (or touch) operation of the user on a button (including a virtual button) on the user equipment, and the control information is sent to the vehicle, so that the control apparatus obtains the control information. Alternatively, the control information may be automatically triggered by the user equipment, for example, the user equipment may send the control information to the vehicle when entering the unlocking area, so that the control apparatus obtains the control information. It should be understood that the control information is not limited in this application. For example, the control information may alternatively be control information for vehicle window opening, control information for air conditioner adjustment, or control information for vehicle startup sent by the user equipment in response to a user operation or automatic triggering.

The account information may be, for example, information about an account corresponding to the user equipment. It should be noted that the user equipment may correspond to one or more accounts. When the position relationship between the user equipment and the vehicle meets the preset condition, the control apparatus may obtain some or all account information of the user equipment. Optionally, the user equipment may interact with the vehicle (for example, a communication apparatus of the vehicle) to transmit the account information. For example, after establishing a Bluetooth connection to a Bluetooth module of the vehicle, the user equipment may send the account information to the Bluetooth module of the vehicle through a Bluetooth link. The control apparatus may obtain the account information of the user equipment from a Bluetooth module of the vehicle when the position relationship between the vehicle and the user equipment meets the preset condition.

Optionally, if the user equipment corresponds to at least two accounts, the control apparatus may determine one account from the at least two accounts, and log in to the account. For example, the control apparatus may determine the one account based on login frequencies and/or quantities of logins of the at least two accounts, for example, determine an account with a largest login frequency from the at least two accounts, or the control apparatus may log in to an account with a latest login in the at least two accounts.

The control apparatus performs greeting control on the vehicle based on the position information and the control information, to identify a vehicle use intention of the user, so as to avoid poor user experience caused by performing out-of-vehicle greeting after the user has a clear control intention for the vehicle. The control apparatus performs greeting control on the vehicle based on the position information and the account information, to provide targeted greeting effect for the user, so as to improve user experience.

The following describes the cases that the control apparatus performs greeting control on the vehicle based on the position information and the control information or that the control apparatus performs greeting control on the vehicle based on the position information and the account information.

For example, that the control apparatus performs greeting control on the vehicle based on the position information and the control information may include: When the position information meets a first condition, and the control information meets a second condition, the control apparatus controls the vehicle to enable an out-of-vehicle greeting mode.

In a first implementation of the foregoing example, the first condition may include: The user equipment enters the out-of-vehicle greeting area of the vehicle. The second condition may include: The user equipment does not unlock the vehicle. As described above, the out-of-vehicle greeting area may be a preset area around the vehicle. In the out-of-vehicle greeting area, the distance between the user equipment and the vehicle is less than or equal to the first preset value. In other words, the user equipment is in the out-of-vehicle greeting area when the distance between the user equipment and the vehicle is less than or equal to the first preset value. For example, the user equipment is in the out-of-vehicle greeting area when the distance between the user equipment and the vehicle is less than or equal to 8 m. Alternatively, in the out-of-vehicle greeting area, the distance between the user equipment and the vehicle is less than or equal to the first preset value and is greater than or equal to a second preset value. In other words, the user equipment is in the out-of-vehicle greeting area when the distance between the user equipment and the vehicle is less than or equal to the first preset value and is greater than or equal to the second preset value. For example, the user equipment is in the out-of-vehicle greeting area when the distance between the user equipment and the vehicle is less than or equal to 8 m and is greater than or equal to 1 m. In this implementation, when detecting that the user equipment enters the out-of-vehicle greeting area of the vehicle or is in the out-of-vehicle greeting area, and the user equipment does not unlock the vehicle, the control apparatus can control the vehicle to enable the out-of-vehicle greeting mode.

In a second implementation of the foregoing example, the first condition may include: The user equipment enters the out-of-vehicle greeting area of the vehicle for the first time before the vehicle completes a target operation. The second condition may include: The user equipment does not unlock the vehicle. The target operation may include at least one of unlocking, locking, power-on, power-off, travel, startup, and shutdown. The out-of-vehicle greeting area is already described in the foregoing implementation. For brevity, details are not described again. In this case, when the control apparatus detects, for the first time before the vehicle completes the target operation, that the user equipment enters the out-of-vehicle greeting area of the vehicle, and the user equipment does not unlock the vehicle, the control apparatus may control the vehicle to enable the out-of-vehicle greeting mode.

Compared with that in the first implementation, in the second implementation, the control apparatus considers, when the user equipment enters the out-of-vehicle greeting area of the vehicle for the first time before the vehicle completes the target operation, performing greeting control on the vehicle, but does not perform greeting control on the vehicle when the user equipment enters the out-of-vehicle greeting area of the vehicle again or a plurality of times later before the vehicle completes the target operation. Problems that user experience is poor and energy consumption of the vehicle is high and that are easily caused by repeatedly controlling the vehicle to perform out-of-vehicle greeting are mainly considered in the following example scenarios. Scenario 1: For example, the user enters the out-of-vehicle greeting area a plurality of times because the user makes a detour to avoid an obstacle or the like. Scenario 2: The user may enter the out-of-vehicle greeting area a plurality of times when wandering around the vehicle. In this case, the user may not have a vehicle use requirement. For example, the user chats around the vehicle, or checks a vehicle condition. The control apparatus can correctly identify a user intention, and does not continue to perform out-of-vehicle greeting.

The following provides example descriptions with reference to Table 1. For the second implementation, refer to a ping-pong scenario in an abnormal scenario in Table 1.

**Table 1**

| Abnormal scenario | Scenario description | Countermeasure |
|---|---|---|
| Ping-pong scenario | The user equipment leaves after entering the out-of-vehicle greeting area. | End the out-of-vehicle greeting mode |
| | The user equipment enters the out-of-vehicle greeting area back and forth (one or more times). | Respond to out-of-vehicle greeting one time for one target operation |
| Abnormal exit | The user equipment does not perform unlocking after entering the out-of-vehicle greeting area. | End the out-of-vehicle greeting mode when the out-of-vehicle greeting mode is completed and unlocking is not performed after 20s elapses. |
| | A Bluetooth connection is disconnected after the user equipment enters the out-of-vehicle greeting area. | |
| Multi-user-equipment concurrency | At least two user equipments approach a greeting area simultaneously. | Respond to an operation that is a first one meeting an out-of-vehicle greeting condition, and ignore an out-of-vehicle greeting requirement of a subsequent user equipment |
| | In at least two user equipments, one user equipment approaches the out-of-vehicle greeting area, and another user equipment is far away from the out-of-vehicle greeting area. For example, the one user equipment is 8 m away from the vehicle, meeting the out-of-vehicle greeting condition, and the another user equipment is from the unlocking area to the locking area, meeting a locking condition. | When a priority of an offboard seeing-out mode triggered by locking is higher than that of the out-of-vehicle greeting mode, control the vehicle to perform offboard seeing-out |
| Interruption of out-of-vehicle greeting by unlocking or locking | The out-of-vehicle greeting mode is not triggered, and an unlocking operation (or a locking operation) is triggered. | Enable an unlocking greeting mode (or an offboard seeing-out mode) |
| | After the out-of-vehicle greeting mode is triggered, an unlocking operation (or a locking operation) is triggered. | End the out-of-vehicle greeting mode, and enable an unlocking greeting mode (or an offboard seeing-out mode) |
| | Quick reaching of the unlocking area after the out-of-vehicle greeting mode is triggered | End the out-of-vehicle greeting mode, and enable an unlocking greeting mode |
| Triggering of greeting by another user in the vehicle | The another user (for example, a second user) is seated in the vehicle, but the vehicle is not started up, triggering out-of-vehicle greeting. | Manner 1: Skip enabling the out-of-vehicle greeting mode |
| | | Manner 2: Perform a part of out-of-vehicle greeting actions (for example, respond to lighting effect greeting, and skip responding to a seat and/or an air spring) |

The out-of-vehicle greeting mode may include a control strategy set for out-of-vehicle greeting in at least one control dimension like account management, vehicle light control, chassis height adjustment, seat adjustment, and animation presentation. For ease of understanding, various control dimensions are first described as examples. It should be noted that, in this embodiment of this application, the control dimension may be further applied to a mode like the unlocking greeting mode, an onboard greeting mode, or the offboard seeing-out mode.
1. Account management. For example, an account login is performed in any greeting mode. For another example, an account logout is performed in the offboard seeing-out mode.
2. Vehicle light control, including but not limited to controlling brightness, chromaticity, a color temperature and the like of a vehicle light. The foregoing already uses examples to describe the vehicle light that can be controlled. For brevity, details are not described again.
   For example, that the control apparatus controls the vehicle light may be at least one of breathing turn-on, breathing blinking, chasing (or scrolling) turn-on, and chasing blinking. Breathing turn-on may be controlling the vehicle light to gradually change in a process of being from dark to bright. Chasing turn-on may be controlling vehicle lights to be sequentially turned on one by one. Breathing blinking may be controlling, for example, controlling the vehicle light for breathing turn-on and then breathing turn-off, to perform circular turn-on a plurality of times. Chasing blinking may be controlling, for example, controlling the vehicle lights to be sequentially turned on one by one and then sequentially turned off one by one, to perform circular turn-on a plurality of time.
   In addition, the control apparatus may control, in any one of the foregoing modes, the vehicle light to be turned on or turned off in a common manner.
3. Chassis height adjustment. For example, a chassis height is adjusted by adjusting a suspension of the vehicle. The suspension may be a common suspension or an air suspension. The common suspension generally includes a spring and a damper cylinder. In the air suspension, a spring is replaced with an air spring. For example, the control apparatus adjusts atmospheric pressure of the air spring of the chassis to control the chassis height of the vehicle.
4. Seat adjustment. For example, a front-rear position and a high-low position of a seat is adjusted, and a tilt angle of a backrest of the seat is adjusted.
5. Animation presentation. For example, the control apparatus may present a first greeting animation in the out-of-vehicle greeting mode through a DLP light and/or an ISD light, and present a second greeting animation in the onboard greeting mode through a central display screen.
6. Rearview mirror control. For example, in any one of the greeting modes, the control apparatus controls the rearview mirror to be unfolded, and in the offboard seeing-out mode, the control apparatus controls the rearview mirror to be folded.
7. Audio playing. For example, in the unlocking greeting mode, an unlocking audio is played when the vehicle is unlocked. For another example, in an offboard seeing-out mode, a locking audio is played when the vehicle is locked.

Optionally, the control apparatus may dynamically control the vehicle light and/or an animation based on a change of a distance between the user and the vehicle. For example, in a process in which the user gradually approaches the vehicle, the control apparatus may control brightness of the vehicle light to gradually increase. For another example, in a process in which the user gradually approaches the vehicle, the control apparatus controls a color of the animation to change from light to deep.

For example, in the out-of-vehicle greeting mode, the control apparatus may perform at least one of the following.
1. Logging in to the account corresponding to the user equipment.
2. Performing greeting control on the vehicle light according to a preset rule. The preset rule may include but is not limited to at least one of breathing turn-on, breathing blinking, chasing (or scrolling) turn-on, and chasing blinking.
   For example, the control apparatus may control a headlight group for breathing turn-on. For another example, the control apparatus may control a through light and a marker light for chasing turn-on.
   Optionally, the control apparatus may determine a vehicle light control strategy based on the logged-in account, and control the vehicle light according to the vehicle light control strategy, so that the greeting effect better meets a user requirement.
3. Adjusting the air spring of the chassis. For example, the control apparatus reduces the chassis height (or a body height) of the vehicle by reducing the atmospheric pressure of the control spring, to help the user enter a cockpit.
   Optionally, the control apparatus may determine, based on the logged-in account, a chassis height corresponding to the user, for example, adjust the chassis height based on a chassis height adjusted by the user in a previous vehicle use process, and for another example, determine the chassis height based on a height input by the user in advance, and adjust the chassis height.
4. Adjusting the seat to a greeting position. For example, in the greeting position, the seat is adjusted to be lower, the backrest of the seat is more tilted, and the seat is in a more rear position, to increase seating space and help the user enter the cockpit. The seating space may be cockpit space in which the user can move when being seated in the cockpit of the vehicle.
   Optionally, the control apparatus may determine, based on the logged-in account, a seating space form corresponding to the user, and then adjust the high-low position, the front-rear position, the tilt angle, a temperature, and the like of the seat.
5. Jointly presenting the first greeting animation by the DLP light and/or the ISD light. Content of a greeting animation is not limited in this application.
6. Playing a first greeting audio. Content of the first greeting audio is not limited in this application. In some embodiments, the first greeting audio may correspond to the first greeting animation.

In the out-of-vehicle greeting mode, the control apparatus may determine an out-of-vehicle greeting strategy based on the logged-in account.

The following Table 2 includes example descriptions of out-of-vehicle greeting.

For example, with reference to the following Table 2, in the out-of-vehicle greeting mode, the control apparatus first controls the headlight to be turned on, then controls the DLP light and the ISD light to simultaneously project and play the first greeting animation for preset duration (for example, 5s), and finally controls the through light and the marker light to be turned on.

The following Table 2 includes the example descriptions of out-of-vehicle greeting.

**Table 2**

| Greeting phase | Out-of-vehicle greeting | Unlocking greeting | Onboard greeting | Offboard seeing-out |
|---|---|---|---|---|
| Action triggering | The user equipment is 8 m away from the vehicle. | Vehicle door unlocking | Vehicle door opening | Locking |
| Action performed | Logging in to the account corresponding to the user equipment | Playing an unlocking sound | Door pulling action: | Playing a locking sound turning off the marker light and/or the through light turning off the DLP light and/or the ISD light, or presenting a seeing-out animation turning off the headlight (at night) rearview mirror folding restoring the air spring of the chassis seat restoration |
| | | Blinking by a yellow light of the rearview mirror | playing the greeting animation through central control screen; | |
| | Breathing turn-on of the headlight group | | | |
| | | Turning on a door handle light rearview mirror unfolding | | |
| | | | turning on an atmosphere light in the vehicle; and | |
| | Adjusting the air spring of the chassis | | | |
| | | | playing startup animation sound effect in the vehicle | |
| | Adjusting the seat to the greeting position | | | |
| | Jointly presenting the greeting animation(dynamically changing when a distance between a person and the vehicle is 1 m) by the DLP light and/or the ISD light | | Seating action: logging in to an account corresponding to a first user; seat adjustment; HUD adjustment; rearview mirror adjustment; steering wheel adjustment; turning-off the headlight and/or the through light (daytime); and turning off the marker light (daytime) | |
| | Turning on the through light and/or the marker light for chasing effect | | | |
| | | | Brake stepping for vehicle startup: | |
| | | | Turning off a ground light; and turning off the DLP light | |
| Implementation effect | A greeting request is received. | An unlocking request (for example, a request sent based on UWB/BLE/NFC /remote control) is received. | A vehicle door is pulled open: The greeting animation and startup sound effect are played, and atmosphere lights in the vehicle are turned on simultaneously. | A locking request (for example, a request sent based on UWB/BLE/NFC /remote control) is received. The following actions are performed simultaneously: playing the locking sound, folding the rearview mirror, restoring the air spring of the chassis, and turning off the light. |
| | First, the headlight is turned on. | The following actions are performed simultaneously: blinking by the yellow light twice; turning on the door handle light; turning on the ground light; playing the unlocking sound; and unfolding the rearview mirror. | The user is seated: Personalized settings (such as the rearview mirror, the seat, a steering wheel, and the HUD) are adjusted. | |
| | Then, the DLP light and the ISD light simultaneously project and play an animation for 5s. | | The vehicle is started up: The ground light is turned off. | |
| | Finally, the marker light and the through light are sequentially turned on. | | | |

It may be understood that the control apparatus does not enable the out-of-vehicle greeting mode of the vehicle when the position information does not meet the first condition or the control information does not meet the second condition. For example, if the position information does not meet the first condition, it indicates that the vehicle does not enter the out-of-vehicle greeting area, or when the vehicle enters the out-of-vehicle greeting area for a non-first time before completing the target operation, the control apparatus does not enable the out-of-vehicle greeting mode of the vehicle. For another example, if the control information does not meet the second condition, that is, the user equipment unlocks the vehicle, the control apparatus may enable the unlocking greeting mode of the vehicle.

For example, that the control apparatus performs greeting control on the vehicle based on the position information and the account information may include: when the position information indicates that the user equipment enters the out-of-vehicle greeting area of the vehicle, logging in, based on the account information, to the account corresponding to the user equipment, and performing greeting control on the vehicle based on a user preference corresponding to the account. It should be noted that the account may have the corresponding user preference, for example, a seat pose preferred by the user (or a seating space form formed by the seat), an audio preferred by the user, an animation preferred by the user, or a chassis height preferred by the user (or the chassis height matching the height of the user).

For example, that the control apparatus performs greeting control on the vehicle further includes: ending the out-of-vehicle greeting mode. When the position information meets a third condition, or the control information meets a fourth condition, the control apparatus may control the vehicle to end the out-of-vehicle greeting mode.

The third condition may be understood as an end condition of the out-of-vehicle greeting mode. The third condition may include: The user equipment leaves the out-of-vehicle greeting area of the vehicle, for example, the ping-pong scenario in Table 1. As described above, in Manner 1, in the out-of-vehicle greeting area, the distance between the user equipment and the vehicle is less than or equal to the first preset value. For example, the user equipment is in the out-of-vehicle greeting area when the distance between the user equipment and the vehicle is less than or equal to 8 m. In Manner 2, in the out-of-vehicle greeting area, the distance between the user equipment and the vehicle is less than or equal to the first preset value, and the distance between the user equipment and the vehicle is greater than or equal to the second preset value. For example, the user equipment is in the out-of-vehicle greeting area when the distance between the user equipment and the vehicle is less than or equal to 8 m and greater than or equal to 1 m. In this case, in Manner 1, that the user equipment leaves the out-of-vehicle greeting area of the vehicle may be that the user equipment goes away from the vehicle until the user equipment leaves the out-of-vehicle greeting area. In Manner 2, that the user equipment leaves the out-of-vehicle greeting area of the vehicle may be that the user equipment goes away from vehicle until the user equipment leaves the out-of-vehicle greeting area, or the user equipment approaches the vehicle until the user equipment leaves the out-of-vehicle greeting area.

The fourth condition may be understood as a triggering condition for ending the out-of-vehicle greeting mode. The fourth condition may include: The user equipment unlocks or locks the vehicle, and/or duration for performing the out-of-vehicle greeting mode reaches preset duration. For example, refer to the scenario of interruption of out-of-vehicle greeting by unlocking or locking in Table 1. When the control information meets the fourth condition, even if the user equipment is still in the out-of-vehicle greeting area, the control apparatus also controls the vehicle to end the out-of-vehicle greeting mode. For example, after the user equipment unlocks the vehicle, the control apparatus may end the out-of-vehicle greeting mode and enable the unlocking greeting mode. When the duration for performing the out-of-vehicle greeting mode reaches the preset duration and another greeting mode is not triggered, the control apparatus considers that the user does not have a driving intention, or cannot perform unlocking due to an abnormal condition, for example, the user equipment may be disconnected from the vehicle (for example, the Bluetooth connection is disconnected). Therefore, the control apparatus may end the out-of-vehicle greeting mode. The preset duration is not limited in this application, for example, may be 5 seconds, 10 seconds, or 20 seconds. For example, refer to the scenario of abnormal exit in Table 1.

In some embodiments, when out-of-vehicle greeting is not triggered, the user equipment unlocks or locks the vehicle, and out-of-vehicle greeting control is not performed. In some other embodiments, after out-of-vehicle greeting is triggered, the user equipment quickly performs unlocking or locking, or the user equipment quickly reaches the unlocking area, and out-of-vehicle greeting control is not performed. Duration from triggering out-of-vehicle greeting to performing unlocking or locking by the user equipment or duration from triggering out-of-vehicle greeting to quickly reaching the unlocking area by the user equipment may be less than duration from responding to triggering by the control apparatus to performing out-of-vehicle greeting control.

For example, when the out-of-vehicle greeting mode ends, the control apparatus may perform at least one of the following.
1-1. Logging out the logged-in account corresponding to the user equipment.
1-2. Ending greeting control on the vehicle light, for example, gradually turning off the vehicle light.
1-3. Restoring the air spring of the chassis. For example, the control apparatus restores the chassis height (or the body height) of the vehicle by controlling the atmospheric pressure of the spring.
1-4. Seat restoration, for example, restoring a height of the seat, the angle of the backrest of the seat, the front-rear position of the seat, and a temperature of the seat.
1-5. Stopping the DLP light and/or the ISD light from presenting the first guest greeting animation, and/or turning off the DLP light and/or the ISD light.
1-6. Stopping playing the first greeting audio; and/or, turning off an audio player.

In some scenarios, at least two user equipments may be connected to the vehicle. In this case, the control apparatus uses one of the at least two user equipments as target user equipment, and performs greeting control on the target user equipment. For example, refer to the scenario of multi-user-equipment concurrency in Table 1.

In a first example, the control apparatus may determine, as the target user equipment based on account information respectively corresponding to the at least two user equipments, user equipment with a largest login frequency or a largest quantity of logins. In this case, the target user equipment is a user that is more frequently used than other user equipment in the at least two user equipments. Then, greeting control is performed on the vehicle based on position information and control information that correspond to the target user equipment or based on the position information and account information that correspond to the target user equipment.

In a second example, the control apparatus may determine, as the target user equipment based on position information respectively corresponding to the at least two user equipments, user equipment that is a first one entering the out-of-vehicle greeting area, and then perform greeting control on the vehicle based on position information and control information that correspond to the target user equipment or based on the position information and account information that correspond to the target user equipment.

In a third example, the control apparatus may determine, as the target user equipment based on greeting modes respectively corresponding to the at least two user equipments, user equipment corresponding to a greeting mode with a highest priority, and then perform greeting control on the vehicle based on position information and control information that correspond to the target user equipment or based on the position information and account information that correspond to the target user equipment. For example, a priority of the unlocking greeting mode is higher than the priority of the out-of-vehicle greeting mode. If one user equipment triggers enabling of the out-of-vehicle greeting mode, and other user equipment triggers enabling of the unlocking greeting mode, the control apparatus determines, as the target user equipment, the user equipment that triggers the unlocking greeting mode, and controls the vehicle to enable the unlocking greeting mode. For another example, the priority of the offboard seeing-out mode is higher than the priority of the out-of-vehicle greeting mode. If one user equipment triggers enabling of the out-of-vehicle greeting mode, and other user equipment triggers enabling of the offboard seeing-out mode, the control apparatus determines, as the target user equipment, the user equipment that triggers the offboard seeing-out mode, and controls the vehicle to enable the offboard seeing-out mode.

In the first example, a main user of the vehicle (for example, a driver of the vehicle) can be better identified, and user experience can be better improved by greeting the main user. In the second example, efficiency of greeting control is higher, and processing complexity is lower. In the third example, a solution for triggering different greeting modes by the user equipment is provided.

In some scenarios, another user may be seated in the vehicle when the user equipment triggers the vehicle to enable the out-of-vehicle greeting mode. For ease of differentiation, a user corresponding to the user equipment is referred to as the first user, and the user who is seated in the vehicle is referred to as the second user. In this case, that the control apparatus performs greeting control on the vehicle may include the following implementations.

Implementation 1: The control apparatus determines whether the second user is seated in the cockpit of the vehicle. When the second user is not seated in the cockpit of the vehicle, the control apparatus performs greeting control in the manner in the foregoing example, for example, performs greeting control on the vehicle based on the position information and the control information, or the position information and the account information. Correspondingly, when the second user is seated in the cockpit of the vehicle, the control apparatus does not perform greeting control (for example, including at least one of out-of-vehicle greeting control, unlocking greeting control, and onboard greeting control) and/or offboard seeing-out control on the vehicle, for example, Manner 1 in the scenario of triggering of greeting by another user in the vehicle in Table 1.

Implementation 2: The control apparatus determines whether the second user is seated in the cockpit of the vehicle; and performs greeting control on the vehicle in a first greeting mode when the second user is not seated in the cockpit of the vehicle; or performs greeting control on the vehicle in a second greeting mode when the second user is seated in the cockpit of the vehicle, for example, Manner 2 in the scenario of triggering of greeting by another user in the vehicle in Table 1.

The first greeting mode may be different from the second greeting mode. For example, the first greeting mode and the second greeting mode are two different out-of-vehicle greeting modes, or the first greeting mode and the second greeting mode may be subsets of the out-of-vehicle greeting mode, or the first greeting mode and the second greeting mode are modes in a part of the control dimension in the out-of-vehicle greeting mode. For example, in the first greeting mode, the control apparatus may control the vehicle light of the vehicle, and in the second greeting mode, the control apparatus may adjust the chassis height of the vehicle. For another example, in the first greeting mode, the control apparatus may control the vehicle to present the first greeting animation, and in the second greeting mode, the control apparatus may control the vehicle to play an audio of the first greeting animation. Alternatively, the second greeting mode may be a subset of the first greeting mode. In other words, the second greeting mode may be a mode in a part of a control dimension in the first greeting mode. For example, in the first greeting mode, the control apparatus controls the vehicle to log in to the account corresponding to the user equipment, performs greeting control on the vehicle light, adjusts the seat, adjusts the chassis, presents the first greeting animation, and plays the first greeting audio. In the second greeting mode, the control apparatus performs greeting control on the vehicle light, presents the first greeting animation, and plays the first greeting audio.

In Implementation 2, it should be further understood that, when performing greeting control on the vehicle in the first greeting mode, or performing greeting control on the vehicle in the second greeting mode, the control apparatus may perform greeting control on the vehicle in the greeting control manner in the foregoing example, for example, based on the position information and the control information, or based on the position information and the account information.

In the foregoing embodiment, the out-of-vehicle greeting mode is mainly described. In addition, that the control apparatus performs greeting control on the vehicle may further include: controlling the vehicle to enable the unlocking greeting mode and/or enable an onboard greeting mode, and the control apparatus may further control the vehicle to perform offboard seeing-out control.

For example, the control apparatus may enable the unlocking greeting mode when the control information indicates the user equipment to unlock the vehicle. The control information may be sent by the user equipment in response to a user operation. For example, in a range in which the user equipment can be connected to the vehicle, after the user operates an unlocking button of the user equipment, the user equipment sends, to the vehicle, the control information indicating unlocking. Alternatively, the control information may be automatically sent by the user equipment. For example, after entering the unlocking area, the user equipment automatically sends the control information indicating to unlock the vehicle.

For example, in the unlocking greeting mode, the control apparatus may perform at least one of the following.
2-1. Playing the unlocking audio.
2-2. Controlling the vehicle light (for example, the rearview mirror light) to be turned on or blink.
2-3. Turning on the door handle light.
2-4. Rearview mirror unfolding.

Table 2 includes example descriptions of the unlocking mode.

For example, with reference to Table 2, in the unlocking greeting mode, the control apparatus controls the yellow light of the rearview mirror to blink twice, the door handle light to be turned on, the ground light to be turned on, the unlocking audio to be played, and the rearview mirror to be unfolded.

Generally, the unlocking greeting mode is enabled after the out-of-vehicle greeting mode. However, the unlocking greeting mode may alternatively be independently executed. For example, the vehicle does not have an out-of-vehicle greeting function, or the user disables the out-of-vehicle greeting function, or before enabling the out-of-vehicle greeting mode, the user triggers unlocking to enable the unlocking greeting mode.

For example, the control apparatus may enable the onboard greeting mode when the user pulls open the vehicle door or the user equipment triggers the vehicle door to flick open. In the onboard greeting mode, the control apparatus may perform at least one of the following.

3-1. Logging in to the account corresponding to the first user. The first user is a user entering the vehicle. Generally, the first user is a user holding the user equipment (including the target user equipment). For example, the control apparatus may capture facial information of the first user, log in, based on the facial information of the first user, to the account corresponding to the first user, and then perform greeting control on the vehicle based on the account corresponding to the first user. The account corresponding to the first user may be an account of the first user stored in a system. Alternatively, when the account corresponding to the first user is not stored in the system, the account corresponding to the first user may be a guest account.

For example, the control apparatus may capture the facial information of the first user when enabling of the onboard greeting mode is triggered, or capture the facial information of the first user before enabling of the onboard greeting mode is triggered, or capture the facial information of the first user after the onboard greeting mode is enabled. This is not limited in this application.

For example, the control apparatus may capture the facial information of the first user in response to a triggering event. The triggering event may include, for example, at least one of the following: The control information indicates the user equipment to unlock the vehicle; the vehicle door of the vehicle is opened (for example, a vehicle door near a driver's seat is opened); and the first user is seated on the driver's seat of the vehicle.

In some examples, before the account corresponding to the first user is logged in to, an account may be already logged in to the vehicle. For example, in the foregoing example, the control apparatus may log in to the account corresponding to the user equipment (the target user equipment in some examples) in the out-of-vehicle greeting mode. The account corresponding to the first user may be the same as or different from the account corresponding to the user equipment. For example, when the first user carries user equipment of the second user, the account corresponding to the user equipment is an account of the second user, and is different from the account of the first user. When the logged-in account corresponding to the user equipment is the account of the first user, a repeated login may not be performed. When the logged-in account corresponding to the user equipment is different from the account corresponding to the first user (for example, the account corresponding to the user equipment is the account of the second user), the account corresponding to the first user may be switched to. For example, the account corresponding to the user equipment is logged out, and the account corresponding to the first user is logged in to.

In this embodiment, only an example in which the account corresponding to the first user is logged in to in the onboard greeting mode is used for description. However, this is limited in this application. For example, the control apparatus may further log in to the account corresponding to the first user in the unlocking greeting mode or the out-of-vehicle greeting mode. When the first user does not enter the cockpit of the vehicle, the control apparatus may capture the facial information of the first user via an image capture apparatus (for example, an out-of-vehicle image capture apparatus) deployed on the vehicle.

In some embodiments, the control apparatus may verify whether the first user has permission for the logged-in account (for example, the account corresponding to the user equipment), and logs out the logged-in account (for example, the account corresponding to the user equipment) if the first user does not have the permission for the logged-in account (for example, the account corresponding to the user equipment). Further, the control apparatus may log in to the account corresponding to the first user.

3-2. Playing the second greeting animation. The control apparatus may display the second guest greeting animation through any display apparatus. The display apparatus may be any display apparatus that can be viewed by the user seated in the cockpit, for example, including but not limited to the central control screen and a HUD apparatus. The second greeting animation is different from the first greeting animation, or has a different presentation effect.

3-3. Turning on the atmosphere light in the vehicle.

3-4. Playing a second greeting audio. Content of the second greeting audio is not limited in this application. In some embodiments, the second greeting audio may be an audio of the second greeting animation.

3-5. Seat adjustment.

3-6. HUD adjustment.

3-7. Rearview mirror adjustment.

3-8. Steering wheel adjustment.

Herein, 3-2 to 3-8 may be all performed based on the logged-in account corresponding to the first user, to satisfy a vehicle use habit of the first user. For example, based on a user preference of the first user, the second greeting animation and the second greeting audio that need to be played are selected, and an atmosphere light turning-on strategy, the seat position, a HUD angle, a rearview mirror angle, and/or a steering wheel height are determined.

3-9. Vehicle light control. For example, the headlight, the through light, and the marker light are turned off, to turn off the vehicle lights that are turned on in the out-of-vehicle greeting mode or the unlocking greeting mode. Alternatively, when outdoor illumination intensity is insufficient, a part of the vehicle lights that are turned on in the out-of-vehicle greeting mode or the unlocking greeting mode, for example, the headlight, are retained.

3-10. Stopping playing the first greeting animation. For example, the control apparatus controls the DLP light and/or the ISD light to be turned off.

At least one of 3-2 and 3-3 may be triggered when the user opens the vehicle door. At least one of 3-5 to 3-8 may be triggered when the user is seated. However, this is not limited in this application. For example, at least one of 3-2 and 3-3 may be triggered when the user is seated, and at least one of 3-5 to 3-8 may be triggered when the user opens the vehicle door.

In vehicle light control in 3-9, for example, a part of the vehicle lights may be triggered when the user is seated, and another part of the vehicle lights may be triggered in a process in which the user starts the vehicle, for example, the process of starting the vehicle may include stepping a brake and pressing a start button, and may be triggered when the user steps on the brake, or may be triggered when the user presses the start button. For example, the control apparatus may turn off at least one of the marker light, the headlight, and the through light after the user is seated. For another example, the control apparatus may turn off the ground light when the user steps on the brake.

Herein, 3-10 may be triggered in the process in which the user starts the vehicle.

The foregoing example triggering condition is merely an example rather than a limitation.

Table 2 includes example descriptions of onboard greeting.

For example, with reference to Table 2, after the user pulls open the vehicle door, the control apparatus may display the second greeting animation through the central control screen, play the second greeting audio, and control the atmosphere light in the vehicle to be turned on, after the user is seated, confirm the user account, adjust the rearview mirror, the seat, the steering wheel, and the HUD, to adjust the personalized settings, and when the vehicle is started up, control the ground light to be turned off.

For example, the control apparatus may enable the offboard seeing-out mode when the control information indicates the user equipment to lock the vehicle. The control information may be sent by the user equipment in response to a user operation. For example, in the range in which the user equipment can be connected to the vehicle, after the user operates a locking button of the user equipment, the user equipment sends, to the vehicle, the control information indicating locking. Alternatively, the control information may be automatically sent by the user equipment. For example, after leaving the vehicle and entering the unlocking area, the user equipment automatically sends the control information indicating to lock the vehicle. The control apparatus may receive the control information based on the UWB technology, the Bluetooth technology, a near field communication (near field communication, NFC) technology, a remote control technology, or the like.

For example, in the offboard seeing-out mode, the control apparatus may perform at least one of the following.

4-1. Playing the locking audio.

4-2. Controlling the vehicle lights to be turned off, for example, the marker light, the through light, the DLP light, ISD light, and headlight to be turned off.

4-3. Rearview mirror folding.

4-4. Vehicle chassis restoration.

4-5. Vehicle seat restoration.

Table 2 includes example descriptions of the offboard seeing-out mode.

Therefore, in this embodiment of this application, the control apparatus can perform greeting control on the vehicle based on the position information of the user equipment and based on the control information or the account information that is of the user equipment and that is obtained based on the position information, to greet the user, so as to improve vehicle use experience of the user.

In a possible implementation, with reference to FIG. 4, for example, the user gradually approaches the vehicle until the user leaves after driving. Vehicle control implemented by the control apparatus may include a part or all of the following processes.

Step 1: The user equipment is approximately 30 M away from the vehicle. In this case, the vehicle positions, based on the Bluetooth technology, the user vehicle for vehicle finding. In this way, power consumption of the user equipment is reduced.

Step 2: The user equipment approaches the vehicle until the user equipment is approximately 10 M away from the vehicle. In this case, the control apparatus switches to positioning using the UWB technology, to improve positioning accuracy.

Step 3: The user equipment continues to approach the vehicle, and when learning, through positioning using the UWB technology, that the user is approximately 8 M away from the vehicle, the control apparatus determines that the user equipment enters the out-of-vehicle greeting area, and the control apparatus controls the vehicle to enable the out-of-vehicle greeting mode. For example, that the control apparatus performs greeting control on the vehicle in the out-of-vehicle greeting mode includes: logging in to a first account, performing breathing turn-on of the headlight group, adjusting the air spring of the chassis to a greeting position, and adjusting the seat to the greeting position; then jointly presenting the first greeting animation by a DLP/ISD headlight, to simultaneously project and playing the animation for 5 seconds; and finally sequentially turning on the marker light and the through light.

Step 4: The user equipment continues to approach the vehicle, when learning, through positioning using the UWB technology, that the user equipment is approximately 1 M away from the vehicle, the control apparatus determines that the user equipment enters the unlocking greeting area, and the control apparatus controls the vehicle to enable the unlocking greeting mode, including at least one of performing unlocking, playing the unlocking sound, blinking by the yellow light of the rearview mirror, turning on the door handle light, turning on the ground light, unfolding the rearview mirror, and the like.

Step 5: When the user pulls open the vehicle door to get on the vehicle, the control apparatus is triggered to control the vehicle to enable the onboard greeting mode. For example, that the control apparatus performs greeting control on the vehicle in the onboard greeting mode includes: When the user pulls open the vehicle door, the control apparatus controls the central control screen to play the second greeting animation, the atmosphere light in the vehicle to be turned on, and the greeting sound effect to be played in the vehicle; and when the user is seated, the control apparatus controls the account corresponding to the first user to be automatically logged in to (if the account corresponding to the first user is the same as the logged-in account, the account does not need to be logged in to again), the seat to be automatically adjusted, the HUD to be automatically adjusted, the rearview mirror to be automatically adjusted, the steering wheel to be automatically adjusted, the headlight/through light to be turned off (the daytime), the marker light to be turned off (the daytime); and when the user steps on the brake, the control apparatus controls the ground light to be turned off and the DLP light to be turned off.

Step 6: When the user leaves the vehicle and locks the vehicle, the control apparatus controls the vehicle to enable an offboard seeing-out function, including: playing the locking sound, turning off the sign marker light, the through light, the DLP light, and the ISD light (at night), turning off the headlight (at night), folding the rearview mirror, restoring the air spring of the chassis to a standard position, and returning the seat to a standard position.

In this embodiment of this application, out-of-vehicle greeting is introduced, in a process in which the user approaches the vehicle, identification can be performed in advance, and vehicle greeting is triggered, and the duration is long. The greeting effect can be defined in a differentiated manner, to improve user experience. In addition, a user experience design is enhanced for modes such as the unlocking greeting mode, the onboard greeting mode, and the offboard seeing-out mode.

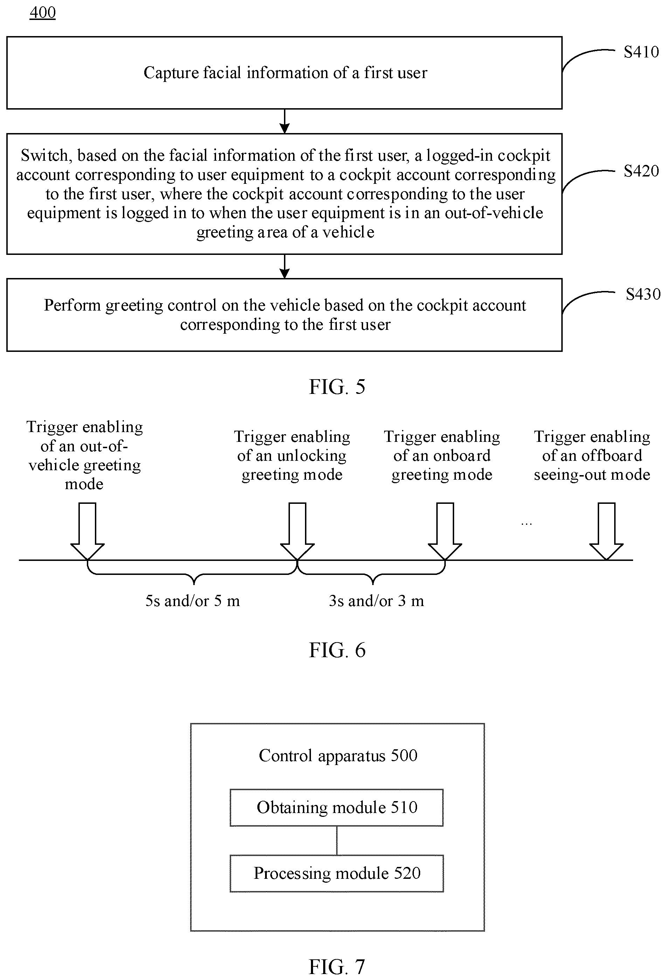

FIG. 5 is a schematic flowchart of a vehicle control method 400 according to an embodiment of this application. Refer to FIG. 5. The method 400 may include a part or all of the following processes.

S410: Capture facial information of a first user.

S420: Switch, based on the facial information of the first user, a logged-in account corresponding to user equipment to an account corresponding to the first user, where the account corresponding to the user equipment is logged in to when the user equipment is in an out-of-vehicle greeting area of a vehicle.

S430: Perform greeting control on the vehicle based on the account corresponding to the first user.

It should be noted that S410 to S430 are described in the foregoing examples. For brevity, details are not described again. However, it should be understood that, in the embodiment shown in the method 300, when the user equipment is in the out-of-vehicle greeting area, greeting control performed by the control apparatus on the vehicle is not limited.

For example, to ensure account security and user privacy, before the facial information of the first user is captured, the control apparatus may encrypt to-be-displayed target information that is under the account corresponding to the user equipment. The target information may be any information that is under the account corresponding to the user equipment and that can be presented. Generally, the target information has high privacy. The target information may be one or more types of preset information, for example, the height, an age, and a contact method of the user. That the control apparatus encrypts the target information may be, for example, adding a mosaic to the target information, blocking the target information, or skipping displaying the target information.

FIG. 6 is a diagram of a vehicle control procedure according to an embodiment of this application. As shown in FIG. 6, a control apparatus may enable an out-of-vehicle greeting mode, an unlocking greeting mode, an onboard greeting mode, and an offboard seeing-out mode based on the foregoing example. It is eliminated that a time interval of approximately 5s and/or a spatial spacing of approximately 5 m exist/exists between triggering enabling of the out-of-vehicle greeting mode and triggering enabling of the unlocking greeting mode. For example, it is estimated that duration of 5s or a distance of 5 m is required for the user equipment to reach an unlocking area after the user equipment enters an out-of-vehicle greeting area. It is estimated that a time interval of approximately 3s and a spatial spacing of approximately 3 m exist between triggering enabling of the unlocking greeting mode and triggering enabling of the onboard greeting mode. For example, it is estimated that duration of 3s or a distance of 3 m is required for the user to get on the vehicle after the user equipment unlocks the vehicle. An estimated distance and/or estimated duration between the greeting modes may be used to determine a range of the out-of-vehicle greeting area, a range of the unlocking area, a range of an onboard greeting area, and the like in the foregoing embodiment.

FIG. 7 is a block diagram of a vehicle control apparatus according to an embodiment of this application. As shown in FIG. 7, the control apparatus 500 includes an obtaining module 510 and a processing module 520.

When the control apparatus 500 is configured to implement the method 300 shown in FIG. 3 and a related embodiment, the obtaining module 510 may be configured to obtain position information of user equipment. The obtaining module 510 is further configured to obtain control information or account information of the user equipment when the position information indicates that a position relationship between a vehicle and the user equipment meets a preset condition. The processing module 520 is configured to perform greeting control on the vehicle based on the position information and the control information, or the position information and the account information.

When the control apparatus 500 is configured to implement the method 400 and a related embodiment in FIG. 5, the obtaining module 510 may be configured to capture facial information of a first user. The processing module 520 is configured to switch, based on the facial information of the first user, a logged-in account corresponding to user equipment to an account corresponding to the first user, where the account corresponding to the user equipment is logged in to when the user equipment is in an out-of-vehicle greeting area of a vehicle. The processing module 520 is further configured to perform greeting control on the vehicle based on the account corresponding to the first user. In the out-of-vehicle greeting area, a distance between the user equipment and the vehicle is less than or equal to a first preset value. Alternatively, in the out-of-vehicle greeting area, the distance between the user equipment and the vehicle is less than or equal to the first preset value and is greater than or equal to a second preset value.

A specific process in which the modules perform the foregoing corresponding steps is described in detail in the foregoing method embodiments. For brevity, details are not described herein again.

Division into the units/modules of the foregoing apparatus is merely logical function division. During actual implementation, all or a part of the units/modules may be integrated into a physical entity, or may be physically separated.

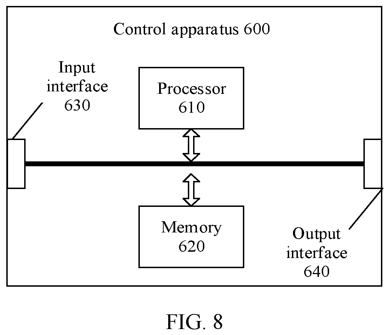

FIG. 8 is a block diagram of another vehicle control apparatus 600 according to an embodiment of this application. The apparatus 600 may include a processor 610 and a memory 620. The processor 610 and the memory 620 communicate with each other through an internal connection path. The memory 620 is configured to store instructions. The processor 610 is configured to execute the instructions stored in the memory 620. The control apparatus 600 may be implemented as an electronic device or a component in the electronic device, for example, a chip, a chip system, or a program system in which a functional module is deployed. The electronic device may be a vehicle or a component in the vehicle.

Optionally, the memory 620 may include a read-only memory and a random access memory, and provide the instructions and data for the processor 610. The memory 620 may be an independent component, or may be integrated into the processor 610.

In some embodiments, the apparatus 600 may further include an input interface 630. The processor 610 may control the input interface 630 to communicate with another device or chip, and specifically, may obtain information or data sent by the another device or chip.

In some embodiments, the apparatus 600 may further include an output interface 640. The processor 610 may control the output interface 640 to communicate with the another device or chip, and specifically, may output information or data to the another device or chip.

In some embodiments, the apparatus 600 may implement corresponding procedures of the methods in embodiments of this application. For brevity, details are not described herein again.

It should be understood that the processor in this embodiment of this application may be an integrated circuit chip, and has a signal processing capability. In an implementation process, steps of the foregoing method embodiments may be implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may alternatively be any conventional processor or the like. The steps of the methods disclosed with reference to embodiments of this application may be directly performed and accomplished by a hardware decoding processor, or may be performed and accomplished by using a combination of hardware in a decoding processor and a software module. The software module may be located in a mature storage medium in the art, for example, a random access memory, a flash memory, a read-only memory, a programmable read-only memory or an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a non-volatile memory, or may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and methods described in this specification is intended to include but is not limited to these and any memory of another suitable type.

An embodiment of this application further provides a computer-readable storage medium, configured to store a computer program. In some embodiments, the computer program enables a computer to perform corresponding procedures in the methods in embodiments of this application. For brevity, details are not described herein again.

An embodiment of this application further provides a computer program product, including computer program instructions. In some embodiments, the computer program instructions enable a computer to perform corresponding procedures in the methods in embodiments of this application. For brevity, details are not described herein again.

An embodiment of this application further provides a computer program. In some embodiments, when the computer program is run on a computer, the computer is enabled to perform corresponding procedures in the methods in embodiments of this application. For brevity, details are not described herein again.

An embodiment of this application further provides a vehicle. In some embodiments, the vehicle includes the vehicle control apparatus or the control chip in embodiments of this application.

A person of ordinary skill in the art may be aware that units and algorithm steps in the examples described with reference to embodiments disclosed in this specification can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle control method, comprising:
obtaining position information of user equipment;
obtaining control information or account information of the user equipment when the position information indicates that a position relationship between a vehicle and the user equipment meets a preset condition; and
performing greeting control on the vehicle based on the position information and the control information, or the position information and the account information.

2. The method according to claim 1, wherein the performing greeting control on the vehicle based on the position information and the account information comprises:
when the position information indicates that the user equipment enters an out-of-vehicle greeting area of the vehicle, logging in, based on the account information, to an account corresponding to the user equipment; and
performing greeting control on the vehicle based on a user preference corresponding to the account.

3. The method according to claim 1 or 2, wherein the performing greeting control on the vehicle based on the position information and the control information comprises:
when the position information meets a first condition, and the control information meets a second condition, controlling the vehicle to enable an out-of-vehicle greeting mode, wherein
the first condition comprises:
the user equipment enters the out-of-vehicle greeting area of the vehicle; or
the user equipment enters the out-of-vehicle greeting area of the vehicle for the first time before the vehicle completes a target operation, wherein the target operation comprises at least one of unlocking, locking, power-on, power-off, travel, startup, and shutdown; and
the second condition comprises:
the user equipment does not unlock the vehicle, wherein
in the out-of-vehicle greeting area, a distance between the user equipment and the vehicle is less than or equal to a first preset value, or in the out-of-vehicle greeting area, the distance between the user equipment and the vehicle is less than or equal to the first preset value and is greater than or equal to a second preset value.

4. The method according to any one of claims 1 to 3, wherein the performing greeting control on the vehicle based on the position information and the control information comprises:
when the position information meets a third condition, or the control information meets a fourth condition, controlling the vehicle to end the out-of-vehicle greeting mode, wherein
the third condition comprises:
the user equipment leaves the out-of-vehicle greeting area of the vehicle; and
the fourth condition comprises:
the user equipment unlocks the vehicle, and/or
duration for performing the out-of-vehicle greeting mode reaches preset duration, wherein
in the out-of-vehicle greeting area, the distance between the user equipment and the vehicle is less than or equal to the first preset value, or in the out-of-vehicle greeting area, the distance between the user equipment and the vehicle is less than or equal to the first preset value and is greater than or equal to the second preset value.

5. The method according to any one of claims 1 to 4, further comprising:
determining, as target user equipment based on account information respectively corresponding to at least two user equipments, user equipment with a largest login frequency or a largest quantity of logins; and
performing greeting control on the vehicle based on position information and control information, or the position information and account information that correspond to the target user equipment.

6. The method according to any one of claims 1 to 4, further comprising:
determining, as target user equipment based on position information respectively corresponding to at least two user equipments, user equipment that is a first one entering the out-of-vehicle greeting area; and
performing greeting control on the vehicle based on position information and control information, or the position information and account information that correspond to the target user equipment.

7. The method according to any one of claims 1 to 4, further comprising:
determining, as target user equipment based on greeting modes respectively corresponding to at least two user equipments, user equipment corresponding to a greeting mode with a highest priority; and
performing greeting control on the vehicle based on position information and control information, or the position information and account information that correspond to the target user equipment.

8. The method according to any one of claims 1 to 7, further comprising:
capturing facial information of a first user;
logging in, based on the facial information of the first user, to an account corresponding to the first user; and
performing greeting control on the vehicle based on the account corresponding to the first user.

9. The method according to any one of claims 1 to 8, wherein the performing greeting control on the vehicle based on the position information and the control information, or the position information and the account information comprises:
determining whether a second user is seated in a cockpit of the vehicle; and
when the second user is not seated in the cockpit of the vehicle, performing greeting control on the vehicle in a first greeting mode based on the position information and the control information, or the position information and the account information; or
when the second user is seated in the cockpit of the vehicle, performing greeting control on the vehicle in a second greeting mode based on the position information and the control information, or the position information and the account information.

10. The method according to claim 9, wherein the obtaining position information of user equipment comprises:
positioning the user equipment via a Bluetooth apparatus; and
positioning the user equipment via an ultra-wideband UWB apparatus when it is determined that the distance between the user equipment and the vehicle is less than or equal to a third preset value, to obtain the position information.

11. A vehicle control method, comprising:
capturing facial information of a first user;
switching, based on the facial information of the first user, a logged-in account corresponding to user equipment to an account corresponding to the first user, wherein the account corresponding to the user equipment is logged in to when the user equipment is in an out-of-vehicle greeting area of a vehicle; and
performing greeting control on the vehicle based on the account corresponding to the first user, wherein
in the out-of-vehicle greeting area, a distance between the user equipment and the vehicle is less than or equal to a first preset value, or in the out-of-vehicle greeting area, the distance between the user equipment and the vehicle is less than or equal to the first preset value and is greater than or equal to a second preset value.

12. The method according to claim 11, wherein before the capturing facial information of a first user, the method further comprises:
encrypting to-be-displayed target information that is under the account corresponding to the user equipment.

13. A control apparatus, comprising:
an obtaining module, configured to obtain position information of user equipment, wherein
the obtaining module is further configured to obtain control information or account information of the user equipment when the position information indicates that a position relationship between a vehicle and the user equipment meets a preset condition; and
a processing module, configured to perform greeting control on the vehicle based on the position information and the control information, or the position information and the account information.

14. The apparatus according to claim 13, wherein the processing module is specifically configured to:
when the position information indicates that the user equipment enters an out-of-vehicle greeting area of the vehicle, log in, based on the account information, to an account corresponding to the user equipment; and
perform greeting control on the vehicle based on a user preference corresponding to the account.

15. The apparatus according to claim 13 or 14, wherein the processing module is specifically configured to:
when the position information meets a first condition, and the control information meets a second condition, control the vehicle to enable an out-of-vehicle greeting mode, wherein
the first condition comprises:
the user equipment enters the out-of-vehicle greeting area of the vehicle; or
the user equipment enters the out-of-vehicle greeting area of the vehicle for the first time before the vehicle completes a target operation, wherein the target operation comprises at least one of unlocking, locking, power-on, power-off, travel, startup, and shutdown; and
the second condition comprises:
the user equipment does not unlock the vehicle, wherein
in the out-of-vehicle greeting area, a distance between the user equipment and the vehicle is less than or equal to a first preset value, or in the out-of-vehicle greeting area, the distance between the user equipment and the vehicle is less than or equal to the first preset value and is greater than or equal to a second preset value.

16. The apparatus according to any one of claims 13 to 15, wherein the processing module is specifically configured to:
when the position information meets a third condition, or the control information meets a fourth condition, control the vehicle to end the out-of-vehicle greeting mode, wherein
the third condition comprises:
the user equipment leaves the out-of-vehicle greeting area of the vehicle; and
the fourth condition comprises:
the user equipment unlocks the vehicle, and/or
duration for performing the out-of-vehicle greeting mode reaches preset duration, wherein
in the out-of-vehicle greeting area, the distance between the user equipment and the vehicle is less than or equal to the first preset value, or in the out-of-vehicle greeting area, the distance between the user equipment and the vehicle is less than or equal to the first preset value and is greater than or equal to the second preset value.

17. A control apparatus, comprising:
an obtaining module, configured to capture facial information of a first user; and
a processing module, configured to switch, based on the facial information of the first user, a logged-in account corresponding to user equipment to an account corresponding to the first user, wherein the account corresponding to the user equipment is logged in to when the user equipment is in an out-of-vehicle greeting area of a vehicle, wherein
the processing module is further configured to perform greeting control on the vehicle based on the account corresponding to the first user; and
in the out-of-vehicle greeting area, a distance between the user equipment and the vehicle is less than or equal to a first preset value, or in the out-of-vehicle greeting area, the distance between the user equipment and the vehicle is less than or equal to the first preset value and is greater than or equal to a second preset value.

18. A vehicle, comprising the control apparatus according to any one of claims 13 to 17.

19. A chip, comprising a processor, configured to invoke computer instructions from a memory and run the computer instructions, to enable a device in which the chip is installed to perform the method according to any one of claims 1 to 12.

20. A computer-readable storage medium, configured to store computer program instructions, wherein the computer program enables a computer to perform the method according to any one of claims 1 to 12.
